# EUROPEAN PATENT APPLICATION

(11) **EP 2 020 505 A2**
(43) Date of publication of application: **04.02.2009**
(21) Application number: 08381027.5
(22) Date of filing: 01.08.2008
(51) Int. Cl.: F03B 13/14

(54) **Machine for using the energy of sea waves**

(30) Priority: 03.08.2007 ES 200702198
(71) Applicant: Teilo Alabarte S.L., La Puebla de la Barca Alava (ES)
(72) Inventor: ECHEPARE FERNANDEZ, Enrique, 01306, LA PUEBLA DE LA BARCA - ALAVA (ES)
(74) Representative: Urizar Anasagasti, Jesus Maria

(57) **Abstract**

A machine for using the energy of sea waves, comprising at least one buoy (1) partially submerged, assembled in a vertical structure (2) anchored on the seabed through which it freely moves, driven by the seawater, said buoy being provided with means for adjusting its tare and at the upper part with a vertical pole (3), which branches out into two vertical racks (4-4') in the upper part which are coupled in respective pinions (5-5') assembled on a free wheel such that they engage and slide in opposite directions and are assembled on a common horizontal shaft (7), such that they drive the shaft in the same rotational direction.

## Description

### Object of the Invention

The present invention relates to a machine intended to transform the energy of sea waves into mechanical energy, which in turn is transformed into electrical energy by means of a generator. This machine comprises a vertical structure which is anchored in a foundation made in the seabed, on which at least one partially submerged buoy moves, driven by the seawater due to the effect of the waves. The vertical rocking movement of this buoy is transformed by means of a mechanism in a rotational movement in a drive shaft.

### Background of the Invention

There are currently many gadgets intended to make use of the energy of sea waves in the patent literature, however not it practice where this technology is scarcely implemented, and its use in comparison with wind energy, for example, is far from becoming a reality.

Most of the described apparatus have a floating buoy which, upon moving due to the effect of the waves, is useful as an element for transmitting the energy, which is transformed into mechanical energy in a cylinder in which air is compressed or, through some type of transmission, into the movement of a drive shaft. All these systems generally have as an end result electrical energy obtained by a generator which is transported to the coast by means of an aerial post or cables submerged in the seabed. There are also machines which work submerged or machines which project above the sea level.

### Description of the Invention

The machine of the invention is of the type of those providing a buoy moved by the waves, assembled in an aerial structure and transforming the undulatory movement of the sea into the rotation of a drive shaft.

The buoy of this machine is hollow and closed and is provided with respective air inlet and water inlet valves, as well as with means for controlling the opening for filling or emptying water therein for the purpose of controlling its tare and consequently its floatability. As will be explained below, the intention is for the buoy to exert the same force in the upward movement as in the downward movement, alternately caused by the wave.

This buoy is guided in a vertical structure anchored in the seabed, such that it carries out alternating upward and downward movement a length that is equivalent to the height of the wave of the sea. The upper part has a vertical pole, which at the end branches into two vertical racks, which are coupled in respective pinions engaging in contrasting directions and assembled on a common horizontal shaft; in the upward movement one of the racks thus drives the drive shaft, whereas in the downward movement it is the opposite rack which drives the shaft in the same rotational direction. In order to maintain a uniform rotational speed said drive shaft incorporates at least one momentum wheel.

Means for regulating the height at which it positions the buoy with respect to the pole have been provided, consisting of a mechanical lift with a worm gear or similar means. This regulation has the purpose of placing the buoy at all times at the same level with respect to the mean height of the seawater in order to adapt to the tides, maintaining the racks in the work area.

A safety system has also been provided for cases of storm, consisting of a gap with dimensions suitable for the buoy, existing in the foundation of the structure just below it in which it is anchored when it is filled with water and descends until filling this gap. The existence of a storm is detected by means of a wave sensor arranged in the structure.

A marine park can be formed by insulated machines, connected only by common electricity conductors to the coast. It is also possible to assemble several units of these types of aligned machines to the coast, the shafts of which machines are coupled to each other by a flexible shafting.

### Description of the Drawings

To complement the description being made and for the purpose of aiding to better understand the features of the invention according to a preferred practical embodiment thereof, a set of drawings is attached hereto in which the following has been shown with an illustrative and non-limiting character:

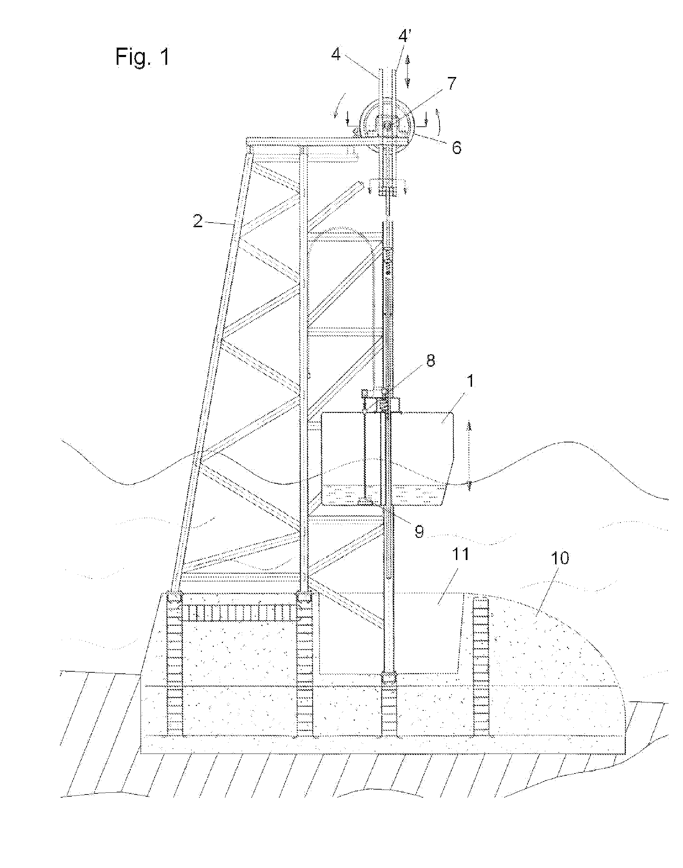

Figure 1 depicts a side elevational view of a machine made according to the invention.

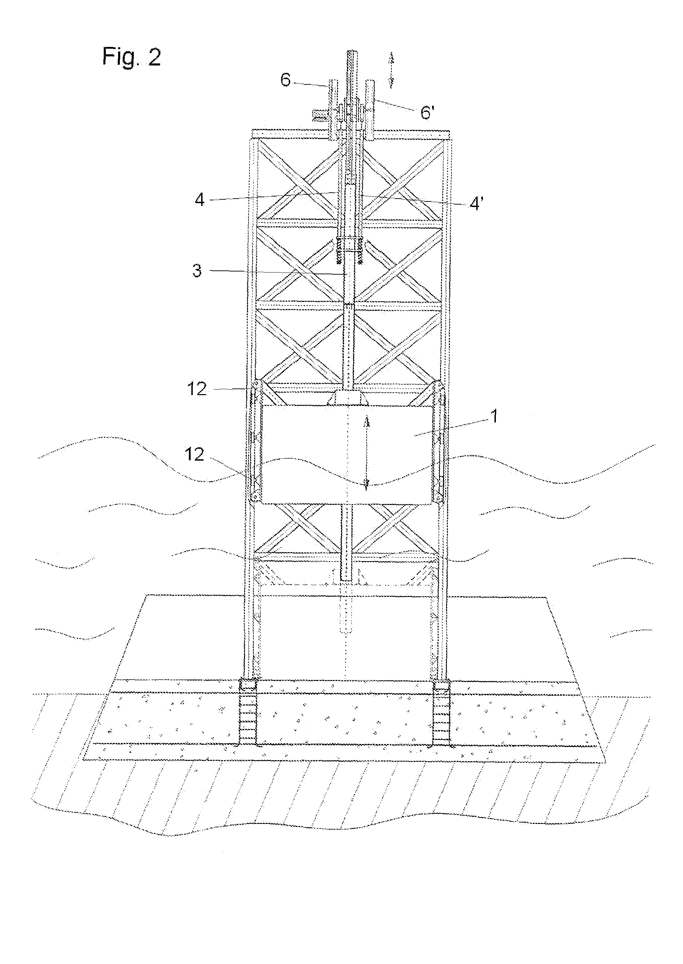

Figure 2 is a front elevational view from the sea of the previous machine.
Figure 3 shows a partially sectioned plan view of the upper area of the machine in which the linear rocking movement is transformed into a rotational movement of a drive shaft.
Figure 4 is a depiction identical to Figure 1 when the buoy (1) has been anchored in the gap (11) existing in the base.
Figure 5 shows a group of machines of this type linearly coupled together, parallel to the coast.

### Preferred Embodiment of the Invention

As can be seen in the mentioned figures, the machine of the invention comprises a structure (2) which is anchored to the seabed in a foundation (10) built for this purpose. This structure, on at least one face, the face facing the sea, is completely vertical and is provided with sliding means (12) for sliding a buoy (1) which is to move upwardly-downwardly by the action of the sea waves. On the upper part it has a mechanism for transforming this upward-downward movement into a rotational movement of a shaft, in which a power generator can be coupled for producing electric power.

The buoy (1) is a hollow body and is provided with an upper air inlet valve (8) and with a second lower seawater inlet valve (9). The machine has means for opening these valves and for voluntarily moving the buoy (1) up and down, which allows controlling the amount of water existing therein and consequently its floatability and also the weight it has. One of the objectives thereof is to achieve a buoy which is heavy enough, but floats partially submerged, so that it can be raised with the waves and that moving downwards due to its own weight, exerts a similar force, which will also be used for the movement of the drive shaft (7), as will be described below.

The buoy (1) has a vertical pole (3) on the upper part, which couples therein through a sliding mechanism which allows regulating the height of the buoy at all times; in a preferred embodiment this mechanism is formed by worm gear (13) which operates in a manner similar to a lift, screwing in one part of this pole until positioning it at the required height.

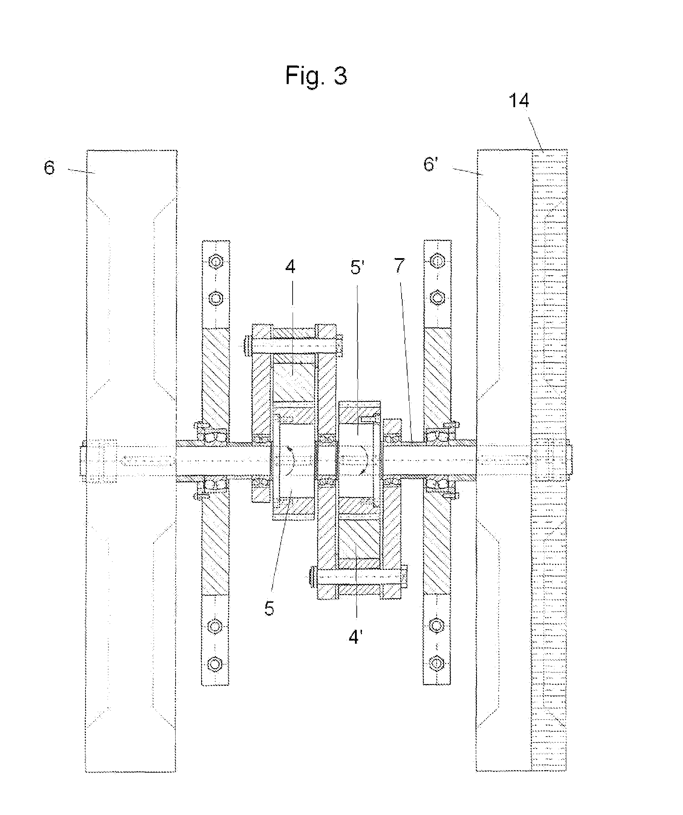

Figure 3 shows in detail the mechanism transforming the movement of the buoy (1) into another rotational movement in a shaft (7). This mechanism starts from the fact that the pole (3) is divided in the upper part into two racks (4-4'), each of the which engages in a pinion (5-5'), assembled in a free wheel such that they engage and slide in opposite directions, both being assembled in a common shaft (7) so that in the upward movement of the racks (4), it is one of them which engages and provides the rotation of the shaft (7), whereas in the downward movement it is the other rack (4') which engages and consequently pulls the shaft forcing it to rotate in the same direction.

For the purpose of minimizing the pulls on the shaft (7) and balancing, in so far as it is possible, the torque and the rotational speed therein, respective momentum wheels (6-6') are arranged performing this function. At least one of these wheels (6) has a geared area (14) in which a cog belt is coupled transmitting the rotation of the shaft (7) to another shaft or to a power generator.

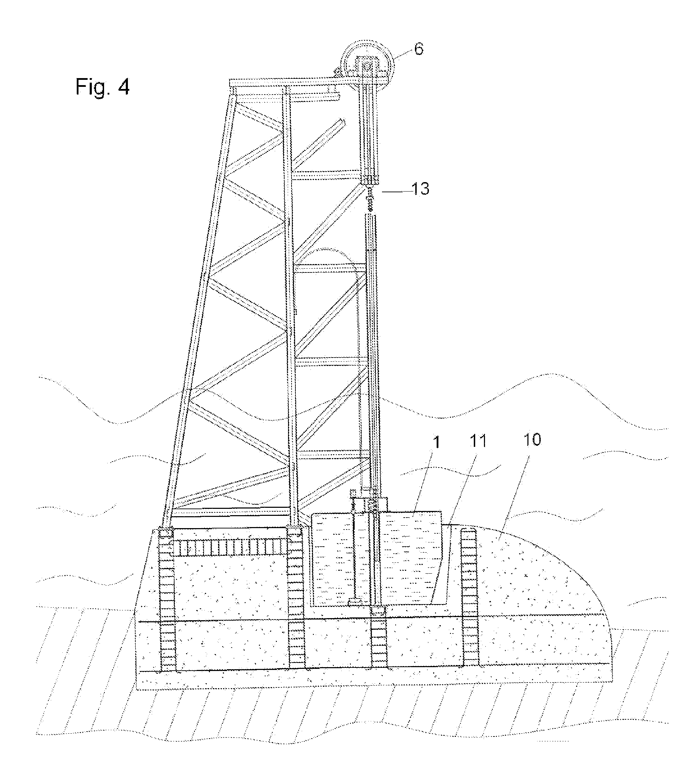

Figure 4 shows the case of a storm or strong wind, during which it is necessary to put the moving elements of the machine in a safe place in order to prevent them from breaking. To that end, a gap (11) made in the platform (10) just below the buoy (1) has been provided, such that in the case of a storm, the buoy is anchored upon filling it with water with the valve (9), and it is lowered to this position, driven by the pole (3) by means of the previously indicated regulation mechanism, in which it will remain while the climatic conditions preventing its normal operation last.

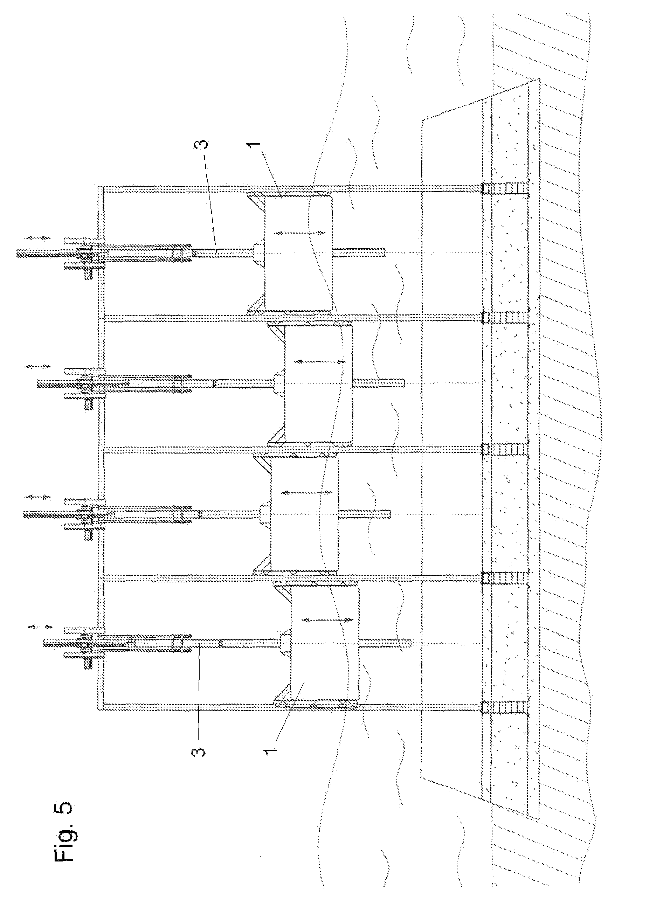

Figure 5 depicts a group of machines of this type in which the structure (2) is common to all of them and they are aligned with one another and with respect to the coast line. In this alternative solution it is possible to connect the shafts (7) of all of them by means of a flexible shafting, such that the torque produced is considerably greater.

Having sufficiently described the nature of the invention, as well as a preferred embodiment, it is stated for all intents and purposes that the materials, shape, size and arrangement of the described elements could be modified provided such modifications do not alter the essential features of the invention, which are claimed below.

## Claims

1. A machine for using the energy of sea waves, comprising at least one partially submerged buoy (1), assembled in a vertical structure (2) anchored on the seabed through which it freely moves, driven by the seawater, **characterized in that** said buoy (1) has a closed hollow body provided with respective air inlet valve (8) and water inlet valve (9) and with means for controlling its opening in order to adjust its tare based on filling or emptying water therein, and at the upper part it incorporates a vertical pole (3), which in the upper part branches out into two vertical racks (4-4'), which are coupled in respective pinions (5-5'), assembled on a free wheel such that they engage and slide in opposite directions and are assembled on a common horizontal shaft (7), such that in the upward movement one of the racks (4) drives the shaft (7), whereas in the downward movement it is the opposite rack (4') which drives the shaft in the same rotational direction, said shaft (7) incorporating at least one momentum wheel (6) which allows maintaining a uniform rotational speed and means for coupling to an electric power generator.

2. The machine according to claim 1, **characterized in that** said pole (3) has means for regulating the height at which the buoy (1) is located, so that it is located in a partially submerged position at all times in order to receive the drive of the waves and so that the racks are located in the work area thereof, formed by a worm gear or a similar mechanism varying its position according to the height of the sea caused by the tides.

3. The machine according to the previous claims, **characterized in that** in the foundation (10) of the structure (2), below the buoy (1), a gap (11) is arranged with dimensions suitable for receiving said buoy therein when it is anchored, filling it with water and making it descend when there is a storm which can affect its operation, which is detected by means of a wave sensor located in the structure (2).

4. The machine according to the previous claims, **characterized in that** it is formed by several units of those described in the previous claims, the shafts of which are coupled to one another by a flexible shafting.
